(19) Europäisches Patentamt / European Patent Office / Office européen des brevets

(11) **EP 3 207 400 B1**

(12) **FASCICULE DE BREVET EUROPEEN**

(45) Date de publication et mention
de la délivrance du brevet:
**14.10.2020 Bulletin 2020/42**

(21) Numéro de dépôt: **15783982.0**

(22) Date de dépôt: **15.10.2015**

(51) Int Cl.:
***G01S 5/02*** *(2010.01)*

(86) Numéro de dépôt international:
**PCT/EP2015/073951**

(87) Numéro de publication internationale:
**WO 2016/059189 (21.04.2016 Gazette 2016/16)**

(54) **PROCÉDÉ POUR LA GÉOLOCALISATION D'UNITÉS MOBILES ÉVOLUANT AU SEIN D'UNE STRUCTURE FERMÉE**

VERFAHREN ZUR GEOPOSITIONIERUNG VON SICH INNERHALB EINER GESCHLOSSENEN STRUKTUR BEWEGENDEN MOBILEN EINHEITEN

METHOD FOR GEOPOSITIONING MOBILE UNITS MOVING AROUND INSIDE A CLOSED STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2014 FR 1460042**

(43) Date de publication de la demande:
**23.08.2017 Bulletin 2017/34**

(73) Titulaire: **Safran Electronics & Defense**
**92100 Boulogne-Billancourt (FR)**

(72) Inventeurs:
• **CHIODINI, Alain**
**92100 Boulogne-Billancourt (FR)**
• **SECHAUD, Patrick**
**92100 Boulogne Billancourt (FR)**

(74) Mandataire: **Prouvez, Julien et al**
**Cabinet Boettcher**
**16, rue Médéric**
**75017 Paris (FR)**

(56) Documents cités:
**US-A1- 2004 033 808      US-A1- 2004 192 353**
**US-A1- 2007 194 987      US-A1- 2008 234 930**
**US-A1- 2009 027 272      US-A1- 2009 201 208**
**US-A1- 2010 074 133      US-A1- 2014 152 437**
**US-A1- 2014 256 353**

• **ILKER BEKMEZCI ET AL: "Periodic Global Broadcast Time Synchronization (PGB-TS) for TDMA Based Sensor Networks", RECENT ADVANCES IN SPACE TECHNOLOGIES, 2007. RAST '07. 3RD INTERN ATIONAL CONFERENCE ON, IEEE, PI, 1 juin 2007 (2007-06-01), pages 531-536, XP031123358, ISBN: 978-1-4244-1056-9**

**Description**

DOMAINE DE L'INVENTION

La présente invention concerne le domaine de la localisation et plus particulièrement la localisation d'unités de communication mobiles lors de leur déploiement en extérieur comme par exemple le déploiement d'équipes de secours, de forces d'intervention, d'équipes de constructions ou de randonneurs.

ARRIERE PLAN DE L'INVENTION

Un système classique de localisation fait appel à des récepteurs de géolocalisation par satellite de type GPS ou similaire (GLONAS, Galileo, ...) équipant les unités de communication des membres d'un groupe. Ces récepteurs GPS permettent de localiser chaque membre du groupe dans un référentiel terrestre à l'aide de leur latitude, longitude et altitude. Les unités de communication peuvent transmettre leurs positions par radio et donc informer un coordinateur de leurs positions respectives. Ce système présente cependant des inconvénients liés à la technologie GPS. En effet, celle-ci peut être rendue inopérante ou imprécise en raison de facteurs environnementaux tels que des orages, une forte humidité ou des interférences radios. Les récepteurs GPS peuvent être également inopérants dans des lieux couverts tels que des bâtiments ou des installations souterraines. Le temps de déploiement d'une localisation par GPS étant lié au temps nécessaire à ce que le récepteur GPS reçoive des signaux issus d'un nombre suffisant de satellites pour pouvoir déterminer sa position, il peut se passer plusieurs minutes avant qu'une unité puisse être positionnée. Enfin, la précision dégradée du GPS pour des utilisations non militaires peut se révéler inadaptée pour certaines interventions qui requièrent une localisation précise dans un bâtiment, comme par exemple des interventions de secours en cas d'incendie. US2014/0152437 décrit par ailleurs un procédé de positionnement relativement à plusieurs points d'accès. Ce document décrit systématiquement l'utilisation de plusieurs points d'accès et d'un groupe d'unités subordonnées. Les unités subordonnées sont mobiles entre elles. Les points d'accès et unités subordonnées comprennent chacune un émetteur/récepteur à bande large et des moyens de communication numérique sans fil sur bande de fréquence étroite avec les points d'accès.

OBJET DE L'INVENTION

Un but de l'invention est de proposer un procédé de positionnement relatif d'unités de communication pouvant être déployé rapidement et indépendamment de la qualité ou de l'existence d'une couverture par un système de géolocalisation par satellite de la zone dans laquelle se situent les unités.

RESUME DE L'INVENTION

A cet effet, on prévoit selon l'invention, un procédé de positionnement relativement à une unité de communication coordinatrice d'un groupe d'unités de communication subordonnées comprenant au moins une première, une deuxième, une troisième et une quatrième unité de communication subordonnée, l'unité de communication coordinatrice et les unités de communication subordonnées étant mobiles entre elles, les unités de communication comprennent chacune un émetteur/récepteur UWB et des moyens de communication numérique sans fil, chaque unité subordonnée comprenant une horloge interne synchronisée avec celle de l'unité coordinatrice pour définir une période de communication partagée, le procédé comprenant les étapes suivantes :

- lors d'une phase préparatoire, transmission par l'unité coordinatrice à chaque unité subordonnée, via les moyens de communication numérique sans fil, d'une table d'identification spécifique comprenant un identifiant, une signature UWB et une durée de retard à l'émission, et communication, via les moyens de communication numérique sans fil, des tables d'identification de chaque unité aux autres unités subordonnées ;
  et, lors d'une phase opératoire,
- émission par chaque unité de sa signature UWB, cette émission étant réalisée après l'écoulement, compté à partir du début de la période de communication, de la durée de retard à l'émission ;
- analyse par chaque unité des signatures UWB émises par les autres unités et détermination des distances séparant cette unité de chacune des autres unités ;
- transmission à l'unité coordinatrice par chaque unité subordonnée des distances séparant cette unité subordonnée de chacune des autres unités, cette transmission se faisant à l'aide des moyens de communication numérique sans fil ;
- détermination par l'unité coordinatrice des positions relatives des unités subordonnées.

Ce procédé permet de déterminer la position d'unités de communication mobiles entre elles sans avoir à recourir à des installations fixes de balisage ou à la disponibilité d'une couverture par satellites, ce qui permet un déploiement rapide des unités de communication sur un terrain inconnu, à l'aide d'un matériel léger et portatif.

L'invention se rapporte également à un système de positionnement relatif comprenant une unité de communication coordinatrice (50) d'un groupe d'unités de communication subordonnées et au moins une première (10), une deuxième (20), une troisième (30) et une quatrième (40) unité de communication subordonnée, l'unité de communication coordinatrice et les unités de communication subordonnées étant mobiles entre elles, l'unité de communication coordinatrice et les unités de communication subordonnées comprennent chacune un émetteur/récepteur UWB (11, 21, 31, 41, 51) et des moyens de communication numérique sans fil (12, 22, 32, 42, 52), chaque unité subordonnée (10, 20, 30, 40) comprenant une horloge interne (15, 25, 35, 45) synchronisée avec celle de l'unité coordinatrice (56) pour définir une période de communication partagée (60), le dispositif étant caractérisé en ce qu'il est agencé pour mettre en oeuvre le procédé selon l'invention.

D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux dessins annexés, parmi lesquelles :

- la figure 1 est une vue schématique des unités de communication selon l'invention ;
- la figure 2 est une vue schématique du découpage temporel des communications entre les unités de communication de la figure 1 ;
- la figure 3 est un logigramme représentant les étapes d'un premier mode de réalisation du procédé de positionnement selon l'invention ;
- la figure 4 est une vue schématique des échanges entre les unités de communication de la figure 1 ;
- la figure 5 est une vue schématique des tables d'identification des unités de communication de la figure 1 ;
- la figure 6 est une représentation schématique de la signature UWB d'une des unités de communication de la figure 1 ;
- la figure 7 est une vue schématique des échanges entre les unités de communication selon un mode particulier de réalisation ;
- la figure 8 est un logigramme représentant les étapes d'un mode de réalisation particulier du procédé de positionnement selon l'invention.

DESCRIPTION DETAILLEE DE L'INVENTION

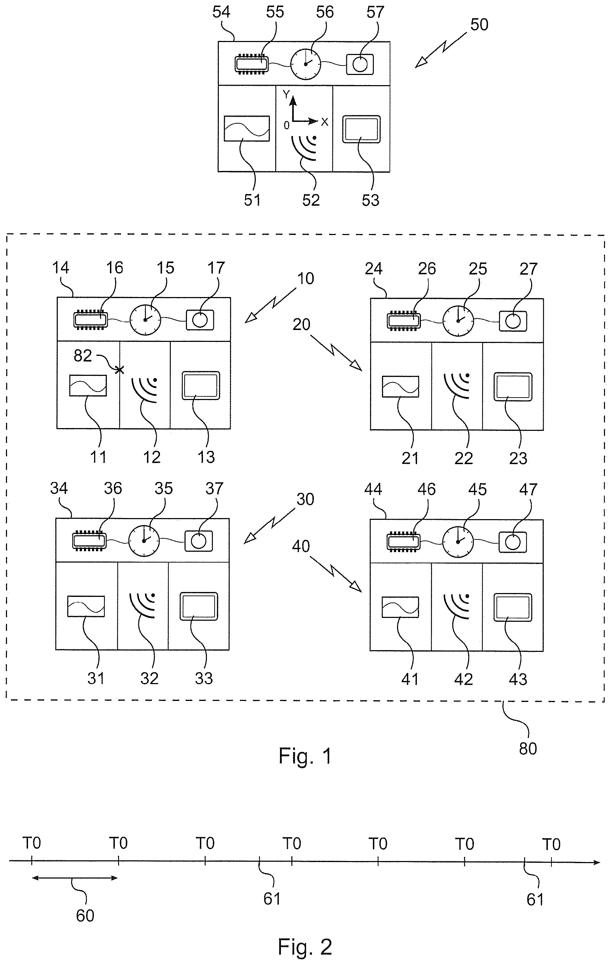

En référence à la figure 1, le procédé de positionnement selon l'invention est décrit en application au positionnement relatif d'un groupe de quatre unités de communication subordonnées comprenant une première unité 10, une deuxième unité 20, une troisième unité 30 et une quatrième unité 40 par rapport à une unité de communication coordinatrice 50.

L'unité 50 comprend un émetteur/récepteur à Ultra Large Bande (ou UWB pour « Ultra Wide Band ») 51, un émetteur /récepteur de type Digital Enhanced Cordless Telephone (DECT) 52 et un récepteur GPS 53 tous reliés à une unité de traitement de données 54 comprenant un microcontrôleur 55 dont le fonctionnement est cadencé par une horloge interne 56 ainsi qu'une mémoire 57. Au sens de la présente demande, un signal UWB occupe une bande passante d'au moins 500 MHz.

La première unité 10 comprend un émetteur/récepteur UWB 11, un émetteur/récepteur de type DECT 12, un récepteur GPS 13 et une unité de traitement de données 14 comprenant une horloge interne 15, un microcontrôleur 16 ainsi qu'une mémoire 17.

La deuxième unité 20, la troisième unité 30 et la quatrième unité 40 comprennent chacune un émetteur/récepteur UWB 21 (respectivement 31 et 41), un émetteur/récepteur DECT 22 (respectivement 32 et 42), un récepteur GPS 23 (respectivement 33 et 43) et une unité de traitement de données 24 (respectivement 34 et 44) comprenant une horloge interne 25 (respectivement 35 et 45), un microcontrôleur 26 (respectivement 36 et 46) ainsi qu'une mémoire 27 (respectivement 37 et 47).

L'unité de traitement 14 de l'unité 10 comprend quatre filtres prédictifs de type « filtre de Kalman » 18.20, 18.30, 18.40 et 18.50 respectivement dédiés à l'estimation et au lissage des distances D10-20, D10-30, D10-40 et D10-50 séparant l'unité 10 des unités 20, 30, 40 et 50. L'acquisition de ces mesures sera détaillée ultérieurement. L'utilisation de tels filtres prédictifs permet à l'unité 10, de produire, à tout moment, une estimation optimisée des distances qui tient compte notamment du moment auquel ont eu lieu chacune des mesures de distance D10-20, D10-30, D10-40 et D10-50.

Les unités de traitement 24, 34, 44 et 54 sont elles aussi pourvues de filtres prédictifs dédiés à l'estimation et au lissage des distances séparant les unités 20, 30, 40 et 50 des autres unités 10, 20, 30, 40, et 50.

Les unités 10, 20, 30, 40 et 50 sont autonomes en énergie et, par conséquent, mobiles.

La communication entre les unités 10, 20, 30, 40 et 50 se fait à l'aide des émetteurs/récepteurs DECT 12, 22, 32, 42 et 52 selon un mode de multiplexage dit Accès Multiple à Répartition dans le Temps (AMRT) sur une période de communication partagée appelée trame 60 se répétant cycliquement et dont la durée est fixe et connue de chaque unité de communication (figure 2). Chaque unité 10, 20, 30, 40 et 50 dispose d'une référence temporelle commune T0 correspondant au début d'une trame 60. Cette référence temporelle T0 est maintenue synchrone entre les unités par l'émission cyclique par l'unité 50 d'un signal de synchronisation DECT 61. Les unités 10, 20, 30 et 40 synchronisent leurs horloges internes respectives 15, 25, 35 et 45 sur ce signal de synchronisation 61. L'unité 50 synchronise, quant à elle, sa propre horloge interne 56 sur l'horloge interne du système de satellites GPS dont elle reçoit les signaux. Les unités 10, 20, 30 et 40 utilisent également, pour la synchronisation de leurs horloges internes respectives 15, 25, 35 et 45, le signal de référence issu de leur récepteur GPS respectifs 13, 23, 33 et 43 lorsque ceux-ci sont en mesure de capter un signal GPS. Le signal de synchronisation 61 permet de réajuster, le cas échant, la synchronisation des unités 10, 20, 30, 40 et 50 entre elles.

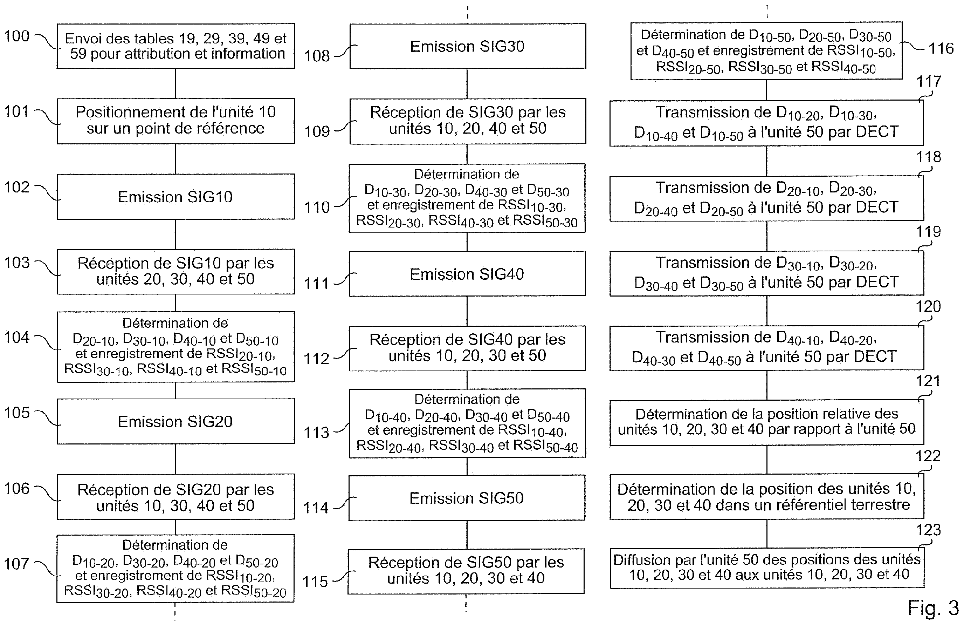

Selon un premier mode de réalisation de l'invention et en référence aux figures 1 à 6, les unités subordonnées 10, 20, 30 et 40 se trouvent à l'intérieur d'une structure fermée, ici un immeuble 80, et l'unité 50 est située à l'extérieur de l'immeuble 80.

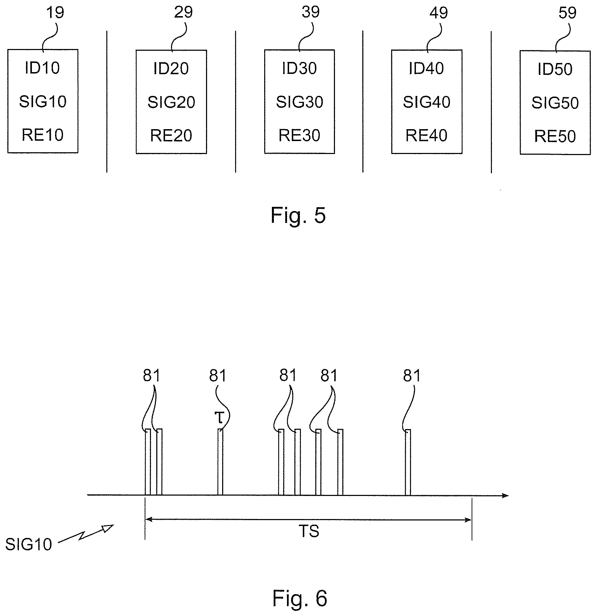

Lors d'une phase préparatoire 100, l'unité coordinatrice 50 envoie un signal DECT 62 (symbolisé par une flèche en trait plein) à l'attention de la première unité 10 transmettant, pour attribution, une table d'identification 19 spécifique à l'unité 10. Cette table d'identification 19 comprend les éléments suivants : un identifiant ID10, une signature UWB SIG10 et une durée de retard à l'émission RE10. L'identifiant ID10 correspond, ici, à un nombre entier. La signature UWB ID10 est représentée en figure 6 et est constituée d'un train d'impulsions non périodiques de durée Ts formé de huit impulsions ultra brèves 81 de durée unitaire $\tau$, ici égale à 0,5 nanoseconde. La durée de retard à l'émission RE10 correspond à la durée, ici égale à une milliseconde, séparant la référence temporelle commune T0 marquant le début de la trame 60 et le début de l'émission par l'unité 10 de la signature UWB SIG10. Le signal DECT 62 comprend également, pour information, les tables d'identification 29, 39, 49 et 59 des unités 20, 30, 40 et 50. Ces tables d'identification 29, 39, 49 et 59 comprennent les identifiants ID20, ID30, ID40 et ID50, les signatures UWB SIG20, SIG30, SIG40 et SIG50 ainsi que les durées de retard à l'émission RE20, RE30, RE40 et RE50 respectifs des unités 20, 30, 40 et 50. Les valeurs des durées de retard à l'émission RE20, RE30, RE40 et RE50 sont, ici, respectivement de deux, trois, quatre et cinq millisecondes. Un signal DECT 63 est ensuite émis par l'unité de communication coordinatrice 50 à l'attention de l'unité de communication subordonnée 20 et comprend la table d'identification 29 pour attribution ainsi que les tables d'identification 19, 39, 49 et 59 pour information. A la suite du signal DECT 63, un signal DECT 64 est émis par l'unité de communication coordinatrice 50 à l'attention de l'unité de communication subordonnée 30 et comprend la table d'identification 39 pour attribution ainsi que les tables d'identification 19, 29, 49 et 59 pour information. A la suite du signal DECT 64, un signal DECT 65 est émis par l'unité de communication coordinatrice 50 à l'attention de l'unité de communication subordonnée 40 et comprend la table d'identification 49 pour attribution ainsi que les tables d'identification 19, 29, 39 et 59 pour information.

Chaque unité 10, 20, 30, 40 et 50 dispose alors des moyens d'identifier les signatures UWB des autres unités. Les durées de retard à l'émission RE10, RE20, RE30, RE40 et RE50 permettent d'éviter une « collision » des émissions des signatures UWB SIG10, SIG20, SIG30, SIG40 et SIG50 des unités 10, 20, 30, 40 et 50. Une « collision » des émissions correspond à une situation dans laquelle deux unités émettent leur signature sur des périodes se recouvrant, ce qui a pour effet d'empêcher ces deux unités de recevoir le signal de l'autre et peut également perturber la réception des signaux par d'autres unités.

Selon une étape préalable 101 de détermination de la position relative de la première unité 10 par rapport à l'unité 50, l'unité 10 est positionnée à un point de référence 82 du bâtiment 80. L'unité 50 connaît la position précise du point de référence 82 grâce à ses coordonnées GPS. L'unité 10 pourra, par exemple, être précisément positionnée sur le point de référence 82 à l'aide d'un plan du bâtiment 80.

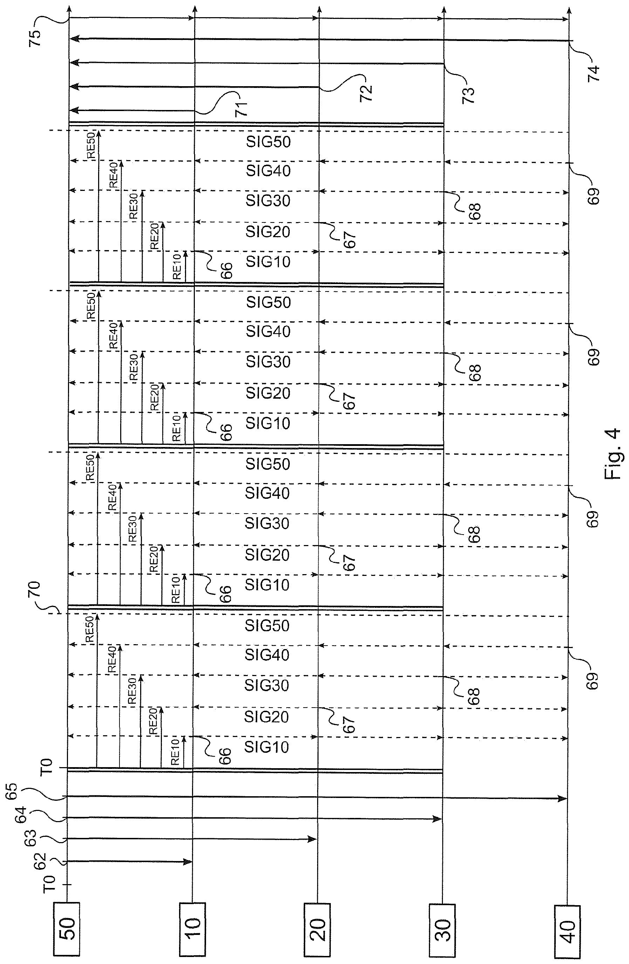

Le procédé de positionnement relativement à l'unité 50 selon l'invention entre alors dans une phase opératoire comprenant une étape 102 dans laquelle l'unité 10 émet sa signature UWB SIG10 à l'aide de l'émetteur/récepteur UWB 11. La signature SIG10 est représentée en traits discontinus sur la figure 4. Cette émission, repérée 66, se fait après écoulement, compté à partir de la référence temporelle commune T0 marquant le début de la trame 60, de la durée de retard à l'émission RE10.

La signature UWB SIG10 est reçue par les émetteurs/récepteurs UWB 21, 31, 41 et 51 respectifs des unités 20, 30, 40 et 50 (étape 103) qui analysent ces signaux et déterminent alors la distance D20-10 séparant l'unité 20 de l'unité 10 ainsi que les distances D30-10, D40-10 et D50-10 séparant respectivement les unités 30, 40 et 50 de l'unité 10 (étape 104). La réception du signal SIG10 par les unités 20, 30, 40 et 50 s'accompagne également de la mesure et l'enregistrement, par chaque unité réceptrice 20, 30, 40 et 50, de la puissance en réception de celui-ci (Received Signal Strength Indication). Les mesures de puissance RSSI20-10, RSSI30-10 RSSI40-10 et RSSI50-10 correspondent aux puissances de réception du signal UWB SIG10 mesurées respectivement par les unités 20, 30, 40 et 50 sont mémorisées par chaque unité réceptrice. Les méthodes permettant de déterminer des distances à l'aide de signaux UWB sont connues de l'homme du métier. Cette détermination est ici réalisée par mesure du temps de propagation du signal UWB.

Lors de l'étape 105, l'unité 20 émet sa signature UWB SIG20 à l'aide de l'émetteur/récepteur UWB 21. Cette émission, repérée 67, se fait après écoulement, compté à partir de T0, de la durée de retard à l'émission RE20. La signature UWB SIG20 est reçue par les émetteurs/récepteurs 11, 31, 41 et 51 respectifs des unités 10, 30, 40 et 50 (étape 106). Ces unités déterminent alors les distances D10-20, D30-20, D40-20 et D50-20 séparant respectivement les unités 10, 30, 40 et 50 de l'unité 20 (étape 107). Les unités 10, 30, 40 et 50 mesurent et enregistrent respectivement les puissances de réception RSSI10-20, RSSI30-20 RSSI40-20 et RSSI50-20 du signal 67.

Les étapes 108 à 116 consistent en la répétition des étapes 102 à 107 appliquées à l'émission des signatures UWB SIG 30, SIG40 et SIG50 sous la forme de signaux repérés 68, 69 et 70 par les unités de communications 30, 40 et 50 ainsi que la détermination des distances suivantes : D10-30, D20-30, D40-30, D50-30, D10-40, D20-40, D30-40, D50-40, D10-50, D20-50, D30-50 et D40-50. De manière identique, les unités de communication enregistrent les puissances de réception associées à chaque mesure de distance.

Les distances D10-20, D10-30, D10-40 et D10-50 sont stockées dans la mémoire 17 de l'unité 10. De manière similaire, les distances séparant chaque unité des autres unités sont stockées dans leurs mémoires respectives 27, 37, 47 et 57. Les étapes 102 à 116 sont alors répétées (ici quatre fois) et les unités 10, 20, 30, 40 et 50 utilisent les nouvelles déterminations de distance pour renseigner les filtres prédictifs dédiés des unités de traitement 14, 24, 34, 44 et 54 et affiner les estimations des distances les séparant des autres unités. Ces estimations sont ensuite transmises à l'unité 50 par signal DECT. L'unité 10 transmet les distances D10-20, D10-30, D10-40 et D10-50 à l'unité 50 à l'aide d'un signal DECT 71 (étape 117) après écoulement, compté à partir de la référence temporelle commune T0, de la durée de retard à l'émission RE10. Les unités 20, 30 et 40 transmettent, de manière similaire, leurs estimations de distances à l'unité 50 respectivement à l'aide des signaux DECT 72, 73 et 74 (étapes 118 à 120).

Sur la base de ces informations, l'unité coordinatrice 50 détermine à l'aide de recoupements des distances selon un procédé analogue à la triangulation, les positions relatives des unités 10, 20, 30 et 40 par rapport à l'unité 50. Cette détermination peut, par exemple, se faire de la manière suivante.

Un repère orthogonal plan (O, x, y) est attaché à l'unité 50. Les coordonnées, dans ce repère, de l'unité 10 sont (X10, Y10), celles de l'unité 20 sont (X20, Y20), celles de l'unité 30 sont (X30, Y30), celles de l'unité 40 sont (X40, Y40) et celles de l'unité 50 sont (X50, Y50). Ainsi, on obtient le système d'équations suivant:

$$D10\text{-}20 = ((X20-X10)^2 + (Y20-Y10)^2)^{\wedge}(1/2) \ ;$$

$$D10\text{-}30 = ((X30-X10)^2 + (Y30-Y10)^2)^{\wedge}(1/2) \ ;$$

$$D10\text{-}40 = ((X40-X10)^2 + (Y40-Y10)^2)^{\wedge}(1/2) \ ;$$

$$D10\text{-}50 = ((X50-X10)^2 + (Y50-Y10)^2)^{\wedge}(1/2) \ ;$$

$$D20\text{-}30 = ((X20-X30)^2 + (Y20-Y30)^2)^{\wedge}(1/2) \ ;$$

$$D20\text{-}40 = ((X20-X40)^2 + (Y20-Y40)^2)^{\wedge}(1/2) \ ;$$

$$D20\text{-}50 = ((X20-X50)^2 + (Y20-Y50)^2)^{\wedge}(1/2) \ ;$$

$$D30\text{-}40 = ((X30-X40)^2 + (Y30-Y40)^2)^{\wedge}(1/2) \ ;$$

$$D30\text{-}50 = ((X30-X50)^2 + (Y30-Y50)^2)^{\wedge}(1/2) \ ;$$

$$D40\text{-}50 = ((X40-X50)^2 + (Y40-Y50)^2)^{\wedge}(1/2) \ .$$

Les distances entre deux unités sont obtenues par filtrage et combinaison des mesures effectuées par chacune des unités concernées. Par exemple, la distance D10-20 est déterminée en faisant la moyenne de la distance D10-20 mesurée par l'unité 10 et la distance D20-10 mesurée par l'unité 20.

Dans le cas où la position de l'unité 10 relativement à l'unité 50 est connue, et où les unités sont réputées être toutes dans un même plan horizontal, l'unité coordinatrice 50 peut déterminer les positions des unités 20, 30 et 40 relativement à sa position (étape 121) par la résolution du système d'équations précédents qui comprend alors dix équations à six inconnues. Les méthodes de résolution, notamment par substitution, d'un tel système sont connues de l'homme du métier.

Les positions relatives des unités 10, 20, 30 et 40 par rapport à l'unité 50 sont donc connues par leurs coordonnées dans le repère orthogonal plan (O, x, y) lié à l'unité 50. L'unité 50 étant pourvue d'un récepteur GPS 53, celle-ci détermine ses coordonnées GPS dans un référentiel terrestre et procède à la détermination de la position des unités 20, 30 et 40 dans ce même référentiel terrestre par un changement de repère, par exemple à l'aide d'une matrice de passage (étape 122). Ainsi, les positions des unités 10, 20, 30 et 40 dans un référentiel terrestre peuvent être déterminées alors même que les récepteurs GPS de ces unités ne sont pas en mesure de recevoir un signal GPS exploitable.

Les positions des unités 10, 20, 30, 40 et 50 sont ensuite diffusées par un signal DECT 75 émis par l'unité 50 à l'attention de l'ensemble des autres unités (étape 123).

Selon un deuxième mode de réalisation, les unités 10, 20, 30, 40 et 50 comprennent chacune un altimètre et les unités 10, 20, 30 et 40 transmettent également à l'unité 50 l'altitude mesurée à l'aide des émetteurs/récepteurs DECT 12, 22, 32 et 42. L'unité 50 peut alors déterminer, en sus de leurs positions relatives en plan, la hauteur relative des unités 10, 20, 30 et 40. On obtient alors un procédé de positionnement tridimensionnel des unités 10, 20, 30 et 40 relativement à l'unité 50.

Un troisième mode de réalisation de l'invention est maintenant décrit dans lequel seule l'étape préalable de détermination de la position relative de la première unité 10 par rapport à l'unité 50 est différente. Selon cette étape 141 de détermination de la position relative de la première unité 10 par rapport à l'unité 50, l'unité 10 située à l'intérieur du bâtiment 80 demeure immobile pendant que l'unité 50 se déplace tout en réalisant des mesures régulières des distances D50-10 et D10-50 séparant l'unité 10 de l'unité 50. Ces mesures s'effectuent par émission et réception des signatures SIG10 et SIG50 par les unités 10 et 50. Pour chaque position de l'unité 50, l'unité de traitement de données 54 enregistre les coordonnées GPS de l'unité 50 dans le référentiel terrestre ainsi que les distances D10-50 et D50-10 associées. L'unité de traitement de données 54 peut alors déterminer par triangulation la position de l'unité 10 dans le référentiel terrestre. Les étapes 100 et 102 à 122 du procédé demeurent inchangées.

Les étapes identiques ou similaires à celle du procédé précédemment décrit porteront une référence numérique identique dans la description qui suit d'un quatrième mode de réalisation de l'invention.

Ce quatrième mode de réalisation s'applique notamment aux situations dans lesquelles les coordonnées de l'unité 10 ne sont pas déterminables lors de la phase préalable (étape 101 ou 141).

Les unités de traitement 14, 24, 34 et 44 respectives des unités subordonnées 10, 20, 30 et 40 sont agencées pour garder en mémoire les dernières positions GPS mesurées. Ainsi, lors d'une rupture de liaison GPS, chaque unité 10, 20, 30 et 40 a en mémoire sa position et sa vitesse (sous la forme d'un vecteur) initiales, c'est-à-dire antérieurement à la mise en place du procédé selon l'invention (étape antérieure à l'étape 100). Les positions initiales des unités 10, 20, 30 et 40 ont respectivement comme coordonnées (X10init, Y10init, Z10init), (X20init, Y20init, Z20init), (X30init, Y30init, Z30init), (X40init, Y40init, Z40init). Les vitesses initiales des unités 10, 20, 30 et 40 sont respectivement notées V10init, V20init, V30init, V40init.

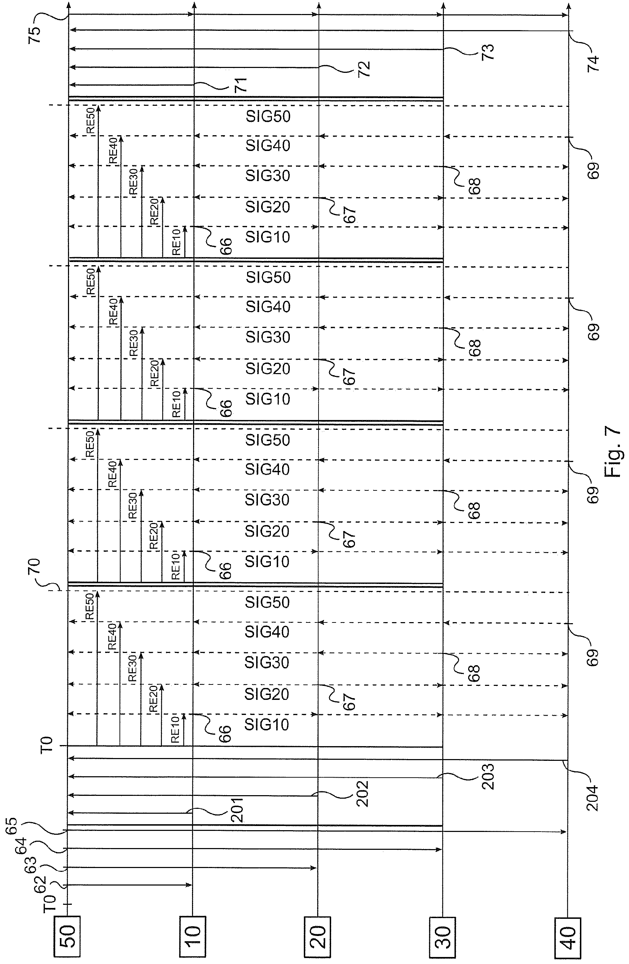

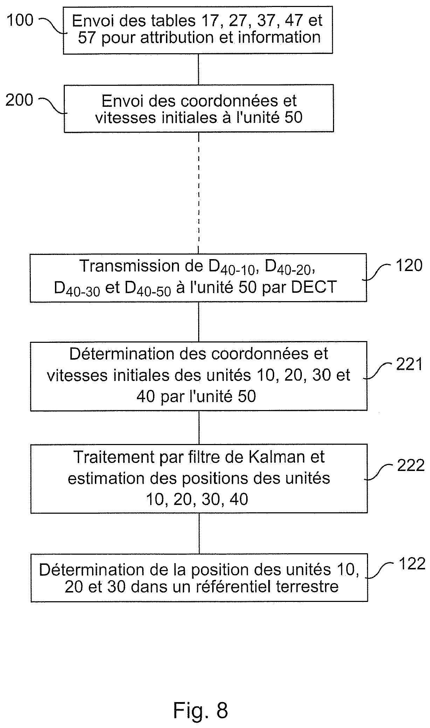

En référence aux figures 7 et 8, après l'étape 100 d'envoi des tables par l'unité 50, chaque unité 10, 20, 30 et 40 transmet respectivement via un signal DECT 201, 202, 203 et 204 ses coordonnées et vitesses initiales à l'unité 50 (étape 200). Le procédé de positionnement se poursuit conformément aux étapes 102 à 120.

Les coordonnées initiales des unités 10, 20, 30, 40 et 50 sont utilisées par l'unité de traitement 54 pour calculer les distances initiales D10-20init, D10-30init, D10-40init, D10-50init, D20-30init, D20-40init, D20-50init, D30-40init et D40-50init.

L'étape 221 de détermination des coordonnées des unités 10, 20, 30 et 40 est effectuée en minimisant la fonction coût $C_1$ suivante :

$$C_1(x_k, y_k, z_k) = \sum_{n \neq k} w_n \left( \sqrt{(x_k - x_n)^2 + (y_k - y_n)^2 + (z_k - z_n)^2} - d_n \right)^2$$

dans laquelle :

- $x_k$, $y_k$ et $z_k$ sont les coordonnées de l'unité k dont on cherche à déterminer la position dans le repère (O, X, Y, Z) lié à l'unité 50;
- $d_n$ est la distance séparant l'unité k de l'unité n ;
- $x_n$, $y_n$ et $z_n$ sont les coordonnées de l'unité n séparée par la distance $d_n$ de l'unité k;
- $w_n$ est un coefficient de pondération lié à la mesure de la puissance en réception du signal provenant du nœud d'indice n. $w_n$ est donc fonction de $RSSI_k(n)$.

Pour la première détermination, les valeurs initiales des variables $x_k$, $y_k$, $z_k$ ainsi que les distances $d_n$ correspondent aux coordonnées initiales des unités ainsi qu'à leurs distances initiales.

L'extremum de la fonction $C_1$ correspond à la position cherchée et est obtenu en résolvant le système d'équations suivant :

$$\begin{cases} \dfrac{\partial C_1}{\partial x_k}(x_k, y_k, z_k) = 0 \\[2mm] \dfrac{\partial C_1}{\partial y_k}(x_k, y_k, z_k) = 0 \\[2mm] \dfrac{\partial C_1}{\partial z_k}(x_k, y_k, z_k) = 0 \end{cases}$$

Soit :

$$\begin{cases} \dfrac{\partial C_1}{\partial x_k}(x_k, y_k, z_k) = \displaystyle\sum_{n \neq k} w_n(x_k - x_n)\left(1 - \dfrac{d_n}{\sqrt{(x_k - x_n)^2 + (y_k - y_n)^2 + (z_k - z_n)^2}}\right) = 0 \\[4mm] \dfrac{\partial C_1}{\partial y_k}(x_k, y_k, z_k) = \displaystyle\sum_{n \neq k} w_n(y_k - y_n)\left(1 - \dfrac{d_n}{\sqrt{(x_k - x_n)^2 + (y_k - y_n)^2 + (z_k - z_n)^2}}\right) = 0 \\[4mm] \dfrac{\partial C_1}{\partial z_k}(x_k, y_k, z_k) = \displaystyle\sum_{n \neq k} w_n(z_k - z_n)\left(1 - \dfrac{d_n}{\sqrt{(x_k - x_n)^2 + (y_k - y_n)^2 + (z_k - z_n)^2}}\right) = 0 \end{cases}$$

Ce système non linéaire peut être résolu au moyen de la méthode itérative de Newton-Raphson :

$$\text{Posons } F_1(x_k, y_k, z_k) = \begin{cases} f_x^1(x_k, y_k, z_k) = \dfrac{\partial C_1}{\partial x_k}(x_k, y_k, z_k) \\[2mm] f_y^1(x_k, y_k, z_k) = \dfrac{\partial C_1}{\partial y_k}(x_k, y_k, z_k) \\[2mm] f_z^1(x_k, y_k, z_k) = \dfrac{\partial C_1}{\partial z_k}(x_k, y_k, z_k) \end{cases}$$

Le triplet $(x_k, y_k, z_k)$ satisfaisant $F_1(x_k, y_k, z_k) = (0,0,0)$ est obtenu itérativement à partir d'une valeur initiale $(x_k, y_k, z_k)_0$ correspondant aux valeurs initiales (par exemple (X10init, Y10init, Z10init) dans le cas d'une application à la détermination de la position de l'unité 10) comme suit :

$$(X_k)_{p+1} = (X_k)_p - J_{F_1}^{-1}\big((X_k)_p\big)F_1\big((X_k)_p\big)$$

où $(X_k)p = (x_k, y_k, z_k)p$, $(X_k)_{p+1} = (x_k, y_k, z_k)_{p+1}$, $J_{F_1}^{-1}$ est l'inverse de la matrice jacobienne associée à $F_1$ et évaluée au point $(X_k)_p$ :

$$J_{F_1} = \frac{\partial\left(f_x^1, f_y^1, f_z^1\right)}{\partial(x_k, y_k, z_k)} = \begin{pmatrix} \dfrac{\partial f_x^1}{\partial x_k} & \dfrac{\partial f_x^1}{\partial y_k} & \dfrac{\partial f_x^1}{\partial z_k} \\[2ex] \dfrac{\partial f_y^1}{\partial x_k} & \dfrac{\partial f_y^1}{\partial y_k} & \dfrac{\partial f_y^1}{\partial z_k} \\[2ex] \dfrac{\partial f_z^1}{\partial x_k} & \dfrac{\partial f_z^1}{\partial y_k} & \dfrac{\partial f_z^1}{\partial z_k} \end{pmatrix}$$

Avec :

$$\frac{\partial f_x^1}{\partial x_k} = \sum_{n \neq k} w_n \left(1 - d_n \left(\frac{(y_k - y_n)^2 + (z_k - z_n)^2}{((x_k - x_n)^2 + (y_k - y_n)^2 + (z_k - z_n)^2)^{\frac{3}{2}}}\right)\right)$$

$$\frac{\partial f_x^1}{\partial y_k} = \sum_{n \neq k} w_n \left(d_n \left(\frac{(x_k - x_n)(y_k - y_n)}{((x_k - x_n)^2 + (y_k - y_n)^2 + (z_k - z_n)^2)^{\frac{3}{2}}}\right)\right)$$

$$\frac{\partial f_x^1}{\partial z_k} = \sum_{n \neq k} w_n \left(d_n \left(\frac{(x_k - x_n)(z_k - z_n)}{((x_k - x_n)^2 + (y_k - y_n)^2 + (z_k - z_n)^2)^{\frac{3}{2}}}\right)\right)$$

$$\frac{\partial f_y^1}{\partial x_k} = \sum_{n \neq k} w_n \left(d_n \left(\frac{(y_k - y_n)(x_k - x_n)}{((x_k - x_n)^2 + (y_k - y_n)^2 + (z_k - z_n)^2)^{\frac{3}{2}}}\right)\right)$$

$$\frac{\partial f_y^1}{\partial y_k} = \sum_{n \neq k} w_n \left(1 - d_n \left(\frac{(x_k - x_n)^2 + (z_k - z_n)^2}{((x_k - x_n)^2 + (y_k - y_n)^2 + (z_k - z_n)^2)^{\frac{3}{2}}}\right)\right)$$

$$\frac{\partial f_y^1}{\partial z_k} = \sum_{n \neq k} w_n \left(d_n \left(\frac{(y_k - y_n)(z_k - z_n)}{((x_k - x_n)^2 + (y_k - y_n)^2 + (z_k - z_n)^2)^{\frac{3}{2}}}\right)\right)$$

$$\frac{\partial f_z^1}{\partial x_k} = \sum_{n \neq k} w_n \left(d_n \left(\frac{(z_k - z_n)(x_k - x_n)}{((x_k - x_n)^2 + (y_k - y_n)^2 + (z_k - z_n)^2)^{\frac{3}{2}}}\right)\right)$$

$$\frac{\partial f_z^1}{\partial y_k} = \sum_{n \neq k} w_n \left( d_n \left( \frac{(z_k - z_n)(y_k - y_n)}{((x_k - x_n)^2 + (y_k - y_n)^2 + (z_k - z_n)^2)^{\frac{3}{2}}} \right) \right)$$

$$\frac{\partial f_z^1}{\partial z_k} = \sum_{n \neq k} w_n \left( 1 - d_n \left( \frac{(x_k - x_n)^2 + (y_k - y_n)^2}{((x_k - x_n)^2 + (y_k - y_n)^2 + (z_k - z_n)^2)^{\frac{3}{2}}} \right) \right)$$

Lorsque la différence $\Delta = \|(X_k))_{p+1} - (X_k)_p\|$ (le symbole $\|\cdot\|$ désigne la norme euclidienne) devient inférieure à une valeur $\varepsilon$ prédéterminée alors le processus itératif est arrêté. Les simulations montrent que la convergence pour une valeur $\varepsilon = 10^{-15}$ est assurée au bout d'un nombre d'itérations inférieur à quinze.

Par cette méthode, les coordonnées, et donc les positions relatives, des unités 10, 20, 30 et 40 sont calculées par l'unité de traitement 54 de l'unité 50 (étape 221). L'unité de traitement 54 calcule également la vitesse de chaque unité subordonnée 10, 20, 30 et 40. Ces données (positions et vitesses) sont ensuite introduites dans un filtre prédictif de Kalman 59 de l'unité de traitement 54. Ce filtre de Kalman 59 produit alors une estimation des positions de chaque unité subordonnée relativement à l'unité 50 (étape 222). L'étape 122 consistant à déterminer la position des unités 10, 20, 30 et 40 dans le référentiel terrestre à l'aide des coordonnées GPS de l'unité 50 est ensuite effectuée. Les positions des unités 10, 20, 30 et 40 sont ensuite diffusées (étape 122) par l'unité 50 auprès des autres unités.

La minimisation de la fonction coût $C_2$ suivante:

$$C_2(x_k, y_k, z_k) = \sum_{n \neq k} w_n ((x_k - x_n)^2 + (y_k - y_n)^2 + (z_k - z_n)^2 - d_n^2)^2$$

qui met en œuvre les mêmes paramètres que C1 permet également de déterminer les positions des unités 10, 20, 30 et 40 relativement à l'unité 50.

La recherche des extremums de cette fonction est effectuée en appliquant la même méthode que pour la fonction $C_1$. Ainsi, l'extremum de la fonction $C_2$ est obtenu en résolvant le système d'équations suivant :

$$\begin{cases} \dfrac{\partial C_2}{\partial x_k}(x_k, y_k, z_k) = 0 \\[2mm] \dfrac{\partial C_2}{\partial y_k}(x_k, y_k, z_k) = 0 \\[2mm] \dfrac{\partial C_2}{\partial z_k}(x_k, y_k, z_k) = 0 \end{cases}$$

Soit :

$$\begin{cases} \dfrac{\partial C_2}{\partial x_k}(x_k, y_k, z_k) = \sum_{n \neq k} w_n(x_k - x_n)((x_k - x_n)^2 + (y_k - y_n)^2 + (z_k - z_n)^2 - d_n^2) = 0 \\[2mm] \dfrac{\partial C_2}{\partial y_k}(x_k, y_k, z_k) = \sum_{n \neq k} w_n(y_k - y_n)((x_k - x_n)^2 + (y_k - y_n)^2 + (z_k - z_n)^2 - d_n^2) = 0 \\[2mm] \dfrac{\partial C_2}{\partial z_k}(x_k, y_k, z_k) = \sum_{n \neq k} w_n(z_k - z_n)((x_k - x_n)^2 + (y_k - y_n)^2 + (z_k - z_n)^2 - d_n^2) = 0 \end{cases}$$

Ce système non linéaire peut être résolu au moyen de la méthode itérative de Newton-Raphson : Posons

$$F_2(x_k, y_k, z_k) = \begin{cases} f_x^2(x_k, y_k, z_k) = \dfrac{\partial C_2}{\partial x_k}(x_k, y_k, z_k) \\[8pt] f_y^2(x_k, y_k, z_k) = \dfrac{\partial C_2}{\partial y_k}(x_k, y_k, z_k) \\[8pt] f_z^2(x_k, y_k, z_k) = \dfrac{\partial C_2}{\partial z_k}(x_k, y_k, z_k) \end{cases}$$

Le triplet $(x_k, y_k, z_k)$ satisfaisant $F_2(x_k, y_k, z_k) = (0,0,0)$ est obtenu itérativement à partir d'une valeur initiale $(x_k, y_k, z_k)_0$ correspondant aux valeurs initiales (par exemple (X10init, Y10init, Z10init) dans le cas d'une application à la détermination de la position de l'unité 10) comme suit :

$$(X_k)_{p+1} = (X_k)_p - J_{F_2}^{-1}\big((X_k)_p\big) F_1\big((X_k)_p\big)$$

Où $(X_k)_p = (x_k, y_k, z_k)_p$, $(X_k)_{p+1} = (x_k, y_k, z_k)_{p+1}$, $J_{F_2}^{-1}$ est l'inverse de la matrice jacobienne associée à $F_2$ et évaluée au point $(X_k)_p$ :

$$J_{F_2} = \frac{\partial\left(f_x^2\, f_y^2\, f_z^2\right)}{\partial\left(x_k, y_k, z_k\right)} = \begin{pmatrix} \dfrac{\partial f_x^2}{\partial x_k} & \dfrac{\partial f_x^2}{\partial y_k} & \dfrac{\partial f_x^2}{\partial z_k} \\[10pt] \dfrac{\partial f_y^2}{\partial x_k} & \dfrac{\partial f_y^2}{\partial y_k} & \dfrac{\partial f_y^2}{\partial z_k} \\[10pt] \dfrac{\partial f_z^2}{\partial x_k} & \dfrac{\partial f_z^2}{\partial y_k} & \dfrac{\partial f_z^2}{\partial z_k} \end{pmatrix}$$

Avec :

$$\frac{\partial f_x^2}{\partial x_k} = \sum_{n \ne k} w_n\big(3(x_k - x_n)^2 + (y_k - y_n)^2 + (z_k - z_n)^2 - d_n^2\big)$$

$$\frac{\partial f_x^2}{\partial y_k} = \sum_{n \ne k} 2 w_n (x_k - x_n)(y_k - y_n)$$

$$\frac{\partial f_x^2}{\partial z_k} = \sum_{n \ne k} 2 w_n (x_k - x_n)(z_k - z_n)$$

$$\frac{\partial f_y^2}{\partial x_k} = \sum_{n \ne k} 2 w_n (y_k - y_n)(x_k - x_n)$$

$$\frac{\partial f_y^2}{\partial y_k} = \sum_{n \ne k} w_n\big((x_k - x_n)^2 + 3(y_k - y_n)^2 + (z_k - z_n)^2 - d_n^2\big)$$

$$\frac{\partial f_y^2}{\partial z_k} = \sum_{n \neq k} 2w_n (y_k - y_n)(z_k - z_n)$$

$$\frac{\partial f_z^2}{\partial x_k} = \sum_{n \neq k} 2w_n (z_k - z_n)(x_k - x_n)$$

$$\frac{\partial f_z^2}{\partial y_k} = \sum_{n \neq k} 2w_n (z_k - z_n)(y_k - y_n)$$

$$\frac{\partial f_z^2}{\partial z_k} = \sum_{n \neq k} w_n ((x_k - x_n)^2 + (y_k - y_n)^2 + 3(z_k - z_n)^2 - d_n^2)$$

Lorsque la différence $\Delta = \|(X_k)_{p+1} - (X_k)_p\|$ (le symbole $\|\cdot\|$ désigne la norme euclidienne) devient inférieure à une valeur $\varepsilon$ prédéterminée alors le processus itératif est arrêté. Les simulations montrent que la convergence pour une valeur $\varepsilon = 10^{-15}$ est assurée au bout d'un nombre d'itérations inférieur à quinze.

Selon un mode de réalisation particulier, les unités subordonnées 10, 20, 30 et 40 demeurent en état de réception GPS et transmettent leur position GPS à l'unité 50 lorsqu'elles sont en mesure de la déterminer. Ces positions sont accompagnées d'un indicateur représentatif de la qualité des signaux GPS reçus. Cet indicateur peut correspondre notamment à la mesure RSSI de la puissance du signal GPS reçu. L'unité de traitement 54 hybride ces mesures de positions GPS, pondérées par un coefficient obtenu à partir du RSSI mesuré pour chaque position, avec les estimations produites par le filtre de Kalman 59 pour mettre à jour l'estimation de la position des unités concernées.

Les stations subordonnées de l'invention réalisent donc chacune une mesure des distances qui les séparent les unes des autres avant de remonter les distances ainsi mesurées à la station coordinatrice. La station coordinatrice embarque des moyens de calcul qui lui permettent de déterminer les positions relatives des unités subordonnées sur la base des distances mesurées et transmises par ces unités subordonnées. L'unité coordinatrice diffuse ensuite ces positions aux unités subordonnées.

Bien entendu, l'invention n'est pas limitée aux modes de réalisation décrits mais englobe toute variante entrant dans le champ de l'invention telle que définie par les revendications.

En particulier :

- bien qu'ici, les valeurs utilisées pour déterminer une valeur initiale permettant de minimiser les fonctions coût $C_1$ ou $C_2$ par itération correspondent aux dernières positions GPS enregistrées par chaque unité, l'invention s'applique également à d'autres types de valeurs initiales, notamment en l'absence de réception GPS récente par les unités. Ces valeurs initiales peuvent, par exemple être choisies comme étant le barycentre des autres unités pondéré ou non par un coefficient obtenu à partir des valeurs RSSI ;
- bien qu'ici les opérations de minimisation des fonctions coût $C_1$ et $C_2$ fassent intervenir la méthode itérative de Newton-Raphson, l'invention s'applique également à la mise en œuvre d'autres types de méthode mathématique de résolution, itératives ou non ;
- bien qu'ici les unités de communication subordonnées et coordinatrice comprennent un émetteur/récepteur DECT, l'invention s'applique également à des unités de communication comprenant d'autres moyens de communication sans fil comme par exemple des moyens de communication selon les normes WIFI, bluetooth ou utilisant des canaux infra rouge ou ultrasoniques ;
- bien qu'ici les unités de communication subordonnées et coordinatrice comprennent un récepteur GPS, l'invention s'applique également à des unités de communication comprenant d'autres moyens de géolocalisation comme par exemple des récepteurs pour les système de satellites : GLONASS ou GALILEO;
- bien qu'ici les unités de communication soient pourvues d'un récepteur GPS, l'invention s'applique également à des unités de communication dépourvues de tels récepteur ;
- bien qu'ici les unités de communication subordonnées et coordinatrice comprennent un microcontrôleur, l'invention s'applique également à des unités de communication comprenant d'autres moyens de traitement de données comme par exemple un microprocesseur ;

- bien qu'ici les identifiants des unités de communication soient des nombres entiers, l'invention s'applique également à d'autres types d'identifiants comme par exemple des octets codant des lettres, ou des trains d'impulsions ;

- bien qu'ici les signatures UWB soient constituées d'un train d'impulsions non périodiques formé de huit impulsions ultra brèves de durée unitaire égale à 0.5 nanoseconde, l'invention s'applique également à d'autres types de signature UWB comme par exemple des trains d'impulsions comprenant un nombre différents d'impulsions, ou comprenant des impulsions de durées variables, plus longues pouvant aller de 100 picosecondes à 2.5 nanosecondes. Les signatures UWB demeurent des séries d'impulsions ultra-brèves dont l'espacement temporel est modulé pour coder une information. Les signaux UWB utilisés ne comportent pas nécessairement de porteuse;

- bien qu'ici la transmission des distances mesurées par les unités subordonnées vers l'unité coordinatrice soit effectuée après écoulement des retard à l'émission, l'invention s'applique également à une transmission des distances mesurées effectuée après écoulement de durées distinctes de celles correspondant aux retards à l'émission attribués à chaque unité subordonnée ;

- bien qu'ici les mesures de distances entre unités soient effectuées quatre fois avant d'être transmises à l'unité coordinatrice, l'invention s'applique également à un nombre différent de mesures de distance avant transmission à l'unité coordinatrice, comme par exemple une seule fois, deux, trois ou plus de quatre ;

- bien qu'ici, la transmission des positions des unités subordonnées par l'unité coordinatrice soit effectuée après détermination de leurs positions respectives dans un référentiel terrestre, l'invention s'applique également à une transmission des positions relatives des unités subordonnées par l'unité coordinatrice avant détermination de leurs positions respectives dans un référentiel terrestre ;

- bien qu'ici, les unités déterminent leurs altitudes à l'aide d'un altimètre, l'invention s'applique également à d'autres moyens d'évaluation de l'altitude, comme par exemple un capteur barométrique ;

- bien qu'ici l'unité coordinatrice soit à l'extérieur d'un bâtiment dans lequel évoluent les unités subordonnées, l'invention s'applique également à des unités coordinatrices et subordonnées toutes situées dans un bâtiment ou en extérieur.

## Revendications

1. Procédé de positionnement relativement à une unité de communication coordinatrice (50) d'un groupe d'unités de communication subordonnées comprenant au moins une première (10), une deuxième (20), une troisième (30) et une quatrième (40) unité de communication subordonnée, l'unité de communication coordinatrice et les unités de communication subordonnées étant mobiles entre elles, l'unité de communication coordinatrice et les unités de communication subordonnées comprennent chacune un émetteur/récepteur UWB (11, 21, 31, 41, 51) et des moyens de communication numérique sans fil (12, 22, 32, 42, 52), chaque unité subordonnée (10, 20, 30, 40) comprenant une horloge interne (15, 25, 35, 45) synchronisée avec celle de l'unité coordinatrice (56) pour définir une période de communication partagée (60), le procédé comprenant les étapes suivantes :

   - lors d'une phase préparatoire (100), transmission par l'unité coordinatrice (50) à chaque unité subordonnée (10, 20, 30, 40), via les moyens de communication numérique sans fil (12, 22, 32, 42, 52), d'une table d'identification spécifique (19, 29, 39, 49, 59) comprenant un identifiant (ID10, ID20, ID30, ID40, ID50), une signature UWB (SIG10, SIG20, SIG30, SIG40, SIG50) et une durée de retard à l'émission (RE10, RE20, RE30, RE40), et communication, via les moyens de communication numérique sans fil (12, 22, 32, 42, 52), des tables d'identification (19, 29, 39, 49, 59) de chaque unité aux autres unités subordonnées (10, 20, 30, 40) ;
   et, lors d'une phase opératoire,
   - émission par chaque unité (10, 20, 30, 40, 50) de sa signature UWB (SIG10, SIG20, SIG30, SIG40, SIG50), cette émission étant réalisée après l'écoulement, compté à partir du début (T0) de la période de communication (60), de la durée de retard à l'émission (RE10, RE20, RE30, RE40);
   - analyse par chaque unité (10, 20, 30, 40, 50) des signatures UWB (SIG10, SIG20, SIG30, SIG40, SIG50) émises par les autres unités (10, 20, 30, 40, 50) et détermination des distances (D10-20, D10-30, D10-40, D10-50, D20-10, D20-30, D20-40, D20-50, D30-10, D30-20, D30-40, D30-50, D40-10, D40-20, D40-30, D40-50, D50-10, D50-20, D50-30, D50-40) séparant cette unité (10, 20, 30, 40, 50) de chacune des autres unités (10, 20, 30, 40, 50) ;
   - transmission à l'unité coordinatrice (50) par chaque unité subordonnée (10, 20, 30, 40) des distances (D10-20, D10-30, D10-40, D10-50, D20-10, D20-30, D20-40, D20-50, D30-10, D30-20, D30-40, D30-50, D40-10, D40-20, D40-30, D40-50) séparant cette unité subordonnée (10, 20, 30, 40) de chacune des autres unités (10, 20, 30, 40, 50), cette transmission se faisant à l'aide des moyens de communication numérique sans fil (12, 22, 32, 42, 52) ;
   - détermination par l'unité coordinatrice (50) des positions relatives des unités subordonnées (10, 20, 30, 40) .

**2.** Procédé selon la revendication 1, dans lequel, l'unité coordinatrice disposant de moyens de sa géolocalisation dans un référentiel terrestre, le procédé comprend l'étape supplémentaire (122) de déterminer les positions relatives des unités subordonnées (10, 20, 30, 40) par rapport à un référentiel terrestre.

**3.** Procédé selon la revendication 1, comprenant une étape préalable (101) de détermination de la position relative d'une unité subordonnée (10) par rapport à l'unité coordinatrice (50) dans laquelle l'unité subordonnée (10) est positionnée à un point de référence (82) dont la position relative par rapport à l'unité coordinatrice (50) est connue.

**4.** Procédé de positionnement selon la revendication 1, dans lequel l'étape de détermination par l'unité coordinatrice (50) des positions relatives des unités subordonnées (10, 20, 30, 40) comprend une étape d'optimisation d'une fonction coût ($C_1, C_2$) correspondant à l'une des expressions suivantes :

$$C_1(x_k, y_k, z_k) = \sum_{n \neq k} w_n \left( \sqrt{(x_k - x_n)^2 + (y_k - y_n)^2 + (z_k - z_n)^2} - d_n \right)^2$$

Ou

$$C_2(x_k, y_k, z_k) = \sum_{n \neq k} w_n ((x_k - x_n)^2 + (y_k - y_n)^2 + (z_k - z_n)^2 - d_n^2)^2$$

dans laquelle :

- $x_k$, $y_k$ et $z_k$ sont les coordonnées de l'unité k dont on cherche à déterminer la position dans le repère (O, X, Y, Z) lié à l'unité 50;
- $d_n$ est la distance séparant l'unité k de l'unité n ;
- $x_n$, $y_n$ et $z_n$ sont les coordonnées de l'unité n séparée par la distance dn de l'unité k;
- $w_n$ est un coefficient de pondération lié à la mesure de la puissance en réception du signal provenant du nœud d'indice n.

**5.** Procédé selon la revendication 1, comprenant une étape préalable de détermination de la position relative d'une unité subordonnée (10) par rapport à l'unité coordinatrice (50) dans laquelle l'unité subordonnée (10) demeurant immobile, l'unité coordinatrice (50) se déplace autour d'une zone dans laquelle se trouve l'unité subordonnée (10), et détermine la position de l'unité subordonnée par triangulation à l'aide d'émissions UWB.

**6.** Procédé selon la revendication 1, dans lequel la synchronisation des horloges internes (15, 25, 35, 45) des unités subordonnées (10, 20, 30, 40) est effectuée à l'aide de l'émission périodique par l'unité coordinatrice (50) d'un signal de synchronisation (61).

**7.** Procédé selon la revendication 6, dans lequel l'émission du signal de synchronisation (61) se fait à l'aide des moyens de communication sans fil (51).

**8.** Procédé selon la revendication 6 ou 7, dans lequel, l'unité coordinatrice (50) étant pourvue d'un récepteur GPS (53), l'horloge interne (56) de l'unité principale (50) correspond à celle du récepteur GPS (53).

**9.** Procédé selon la revendication 1, dans lequel les unités (10, 20, 30, 40, 50) comprenant des moyens d'évaluation de l'altitude, le procédé comprend l'étape supplémentaire de déterminer les altitudes des unités subordonnées (10, 20, 30, 40) relativement à l'unité coordinatrice (50).

**10.** Système de positionnement relatif comprenant une unité de communication coordinatrice (50) d'un groupe d'unités de communication subordonnées et au moins une première (10), une deuxième (20), une troisième (30) et une quatrième (40) unité de communication subordonnée, l'unité de communication coordinatrice et les unités de communication subordonnées étant mobiles entre elles, l'unité de communication coordinatrice et les unités de communication subordonnées comprennent chacune un émetteur/récepteur UWB (11, 21, 31, 41, 51) et des moyens de communication numérique sans fil (12, 22, 32, 42, 52), chaque unité subordonnée (10, 20, 30, 40) comprenant une horloge interne (15, 25, 35, 45) synchronisée avec celle de l'unité coordinatrice (56) pour définir une période de communication partagée (60), le dispositif étant **caractérisé en ce qu'**il est agencé pour mettre en oeuvre le procédé selon la revendication 1.

11. Système de positionnement selon la revendication 10 dans lequel une des unité de communication (10, 20, 30, 40, 50) comprend un récepteur GPS (13, 23, 33, 43, 53).


**Patentansprüche**

1. Verfahren zur Positionierung einer Gruppe von untergeordneten Kommunikationseinheiten relativ zu einer koordinierenden Kommunikationseinheit (50), wobei die Gruppe von untergeordneten Kommunikationseinheiten mindestens eine erste untergeordnete Kommunikationseinheit (10), eine zweite untergeordnete Kommunikationseinheit (20), eine dritte untergeordnete Kommunikationseinheit (30) und eine vierte untergeordnete Kommunikationseinheit (40) umfasst, wobei die koordinierende Kommunikationseinheit und die untergeordneten Kommunikationseinheiten zueinander beweglich sind, wobei die koordinierende Kommunikationseinheit und die untergeordneten Kommunikationseinheiten jeweils einen UWB-Sender/Empfänger (11, 21, 31, 41, 51) und digitale drahtlose Kommunikationsmittel (12, 22, 32, 42, 52) umfassen, wobei jede untergeordnete Einheit (10, 20, 30, 40) eine innere Uhr (15, 25, 35, 45) umfasst, die mit der der koordinierenden Einheit (56) synchronisiert ist, um einen gemeinsamen Kommunikationszeitraum (60) zu definieren, wobei das Verfahren die folgenden Schritte umfasst:

- während einer Vorbereitungsphase (100) Übertragung einer spezifischen Identifikationstabelle (19, 29, 39, 49, 59) durch die koordinierende Einheit (50) an jede untergeordnete Einheit (10, 20, 30, 40) über die digitalen drahtlosen Kommunikationsmittel (12, 22, 32, 42, 52), wobei die spezifische Identifikationstabelle (19, 29, 39, 49, 59) eine Kennung (ID10, ID20, ID30, ID40, ID50), eine UWB-Signatur (SIG10, SIG20, SIG30, SIG40, SIG50) und eine Übertragungsverzögerungsdauer (RE10, RE20, RE30, RE40) umfasst, und Übermittlung der Identifikationstabellen (19, 29, 39, 49, 59) jeder Einheit an die anderen untergeordneten Einheiten (10, 20, 30, 40) über die digitalen drahtlosen Kommunikationsmittel (12, 22, 32, 42, 52);
und während einer Betriebsphase
- Senden der jeweiligen UWB-Signatur (SIG10, SIG20, SIG30, SIG40, SIG50) durch jede Einheit (10, 20, 30, 40, 50), wobei dieses Senden nach dem Ablauf der Übertragungsverzögerungsdauer (RE10, RE20, RE30, RE40) erfolgt, gerechnet ab dem Beginn (T0) des Kommunikationszeitraums (60);
- Analyse der durch die anderen Einheiten (10, 20, 30, 40, 50) gesendeten UWB-Signaturen (SIG10, SIG20, SIG30, SIG40, SIG50) mittels jeder Einheit (10, 20, 30, 40, 50) und Bestimmung der Abstände (D10-20, D10-30, D10-40, D10-50, D20-10, D20-30, D20-40, D20-50, D30-10, D30-20, D30-40, D30-50, D40-10, D40-20, D40-30, D40-50, D50-10, D50-20, D50-30, D50-40), die diese Einheit (10, 20, 30, 40, 50) von jeder der anderen Einheiten (10, 20, 30, 40, 50) trennen;
- Übertragung der Abstände (D10-20, D10-30, D10-40, D10-50, D20-10, D20-30, D20-40, D20-50, D30-10, D30-20, D30-40, D30-50, D40-10, D40-20, D40-30, D40-50), die diese untergeordnete Einheit (10, 20, 30, 40) von jeder der anderen Einheiten (10, 20, 30, 40, 50) trennen, an die koordinierende Einheit (50) durch jede untergeordnete Einheit (10, 20, 30, 40), wobei diese Übertragung mit Hilfe digitaler drahtloser Kommunikationsmittel (12, 22, 32, 42, 52) erfolgt;
- Bestimmung der relativen Positionen der untergeordneten Einheiten (10, 20, 30, 40) durch die koordinierende Einheit (50).

2. Verfahren nach Anspruch 1, bei dem, da die koordinierende Einheit über Mittel für ihre Geolokalisierung in einem terrestrischen Bezugssystem verfügt, das Verfahren den zusätzlichen Schritt (122) des Bestimmens der relativen Positionen der untergeordneten Einheiten (10, 20, 30, 40) in Bezug auf ein terrestrisches Bezugssystem umfasst.

3. Verfahren nach Anspruch 1, umfassend einen vorherigen Schritt (101) der Bestimmung der relativen Position einer untergeordneten Einheit (10) in Bezug auf die koordinierende Einheit (50), bei dem die untergeordnete Einheit (10) an einem Referenzpunkt (82) positioniert ist, dessen relative Position in Bezug auf die koordinierende Einheit (50) bekannt ist.

4. Verfahren zur Positionierung nach Anspruch 1, bei dem der Schritt der Bestimmung der relativen Positionen der untergeordneten Einheiten (10, 20, 30, 40) durch die koordinierende Einheit (50) einen Schritt der Optimierung einer Kostenfunktion ($C_1$, $C_2$) umfasst, die einem der folgenden Ausdrücke entspricht:

$$C_1(x_k, y_k, z_k) = \sum_{n \neq k} w_n \left( \sqrt{(x_k - x_n)^2 + (y_k - y_n)^2 + (z_k - z_n)^2} - d_n \right)^2$$

oder

$$C_2(x_k, y_k, z_k) = \sum_{n \neq k} w_n ((x_k - x_n)^2 + (y_k - y_n)^2 + (z_k - z_n)^2 - d_n^2)^2$$

in dem:

- $x_k$, $y_k$ und $z_k$ die Koordinaten der Einheit k sind, deren Position in dem Bezugssystem (O, X, Y, Z), das mit der Einheit 50 verbunden ist, man zu bestimmen sucht;
- $d_n$ der Abstand ist, der die Einheit k von der Einheit n trennt;
- $x_n$, $y_n$ und $z_n$ die Koordinaten der Einheit n sind, die durch den Abstand $d_n$ von der Einheit k getrennt ist;
- $w_n$ ein Gewichtungskoeffizient ist, der mit der Messung der Leistung bei Empfang des aus dem Index-Knoten n stammenden Signals verbunden ist.

5. Verfahren nach Anspruch 1, umfassend einen vorherigen Schritt der Bestimmung der relativen Position einer untergeordneten Einheit (10) in Bezug auf die koordinierende Einheit (50), bei dem die untergeordnete Einheit (10) ortsfest bleibt, wobei sich die koordinierende Einheit (50) um eine Zone bewegt, in der sich die untergeordnete Einheit (10) befindet, und die Position der untergeordneten Einheit durch Triangulation mittels UWB-Aussendungen bestimmt.

6. Verfahren nach Anspruch 1, bei dem die Synchronisierung der inneren Uhren (15, 25, 35, 45) der untergeordneten Einheiten (10, 20, 30, 40) mit Hilfe periodischer Sendung eines Synchronisationssignals (61) durch die koordinierende Einheit (50) erfolgt.

7. Verfahren nach Anspruch 6, bei dem das Senden des Synchronisationssignals (61) mittels drahtloser Kommunikationsmittel (51) erfolgt.

8. Verfahren nach Anspruch 6 oder 7, bei dem, da die koordinierende Einheit (50) mit einem GPS-Empfänger (53) versehen ist, die innere Uhr (56) der Haupteinheit (50) der des GPS-Empfängers (53) entspricht.

9. Verfahren nach Anspruch 1, bei dem die Einheiten (10, 20, 30, 40, 50) Mittel zum Auswerten der Höhe umfassen, wobei das Verfahren den zusätzlichen Schritt des Bestimmens der Höhen der untergeordneten Einheiten (10, 20, 30, 40) relativ zur koordinierenden Einheit (50) umfasst.

10. System zur relativen Positionierung, umfassend eine koordinierende Kommunikationseinheit (50) einer Gruppe von untergeordneten Kommunikationseinheiten und mindestens eine erste untergeordnete Kommunikationseinheit (10), eine zweite untergeordnete Kommunikationseinheit (20), eine dritte untergeordnete Kommunikationseinheit (30) und eine vierte untergeordnete Kommunikationseinheit (40), wobei die koordinierende Kommunikationseinheit und die untergeordneten Kommunikationseinheiten zueinander beweglich sind, wobei die koordinierende Kommunikationseinheit und die untergeordneten Kommunikationseinheiten jeweils einen UWB-Sender/Empfänger (11, 21, 31, 41, 51) und drahtlose digitale Kommunikationsmittel (12, 22, 32, 42, 52) umfassen, wobei jede untergeordnete Einheit (10, 20, 30, 40) eine innere Uhr (15, 25, 35, 45) umfasst, die mit der der koordinierenden Einheit (56) synchronisiert ist, um einen gemeinsamen Kommunikationszeitraum (60) zu definieren, wobei die Vorrichtung **dadurch gekennzeichnet ist, dass** sie ausgebildet ist, um das Verfahren nach Anspruch 1 durchzuführen.

11. System zur Positionierung nach Anspruch 10, bei dem eine der Kommunikationseinheiten (10, 20, 30, 40, 50) einen GPS-Empfänger (13, 23, 33, 43, 53) umfasst.

**Claims**

1. A method of positioning a group of subordinate communications units relative to a coordinating communications unit (50), the group comprising at least first, second, third, and fourth subordinate communications units (10, 20, 30, 40), the coordinating communications unit and the subordinate communications units being movable relative to one another, each communications unit having a UWB transceiver (11, 21, 31, 41, 51) and digital wireless communications means (12, 22, 32, 42, 52), each subordinate unit (10, 20, 30, 40) including an internal clock (15, 25, 35, 45) synchronized with the clock of the coordinating unit (56) in order to define a shared communications period (60), the method comprising the following steps:

   • during a preparatory stage (100), the coordinating unit (50) transmitting to each subordinate unit (10, 20, 30, 40) via the wireless digital communications means (12, 22, 32, 42, 52) a specific identification table (19, 29, 39, 49, 59) comprising an identifier (ID10, ID20, ID30, ID40, ID50), a UWB signature (SIG10, SIG20, SIG30, SIG40, SIG50), and a transmission delay duration (RE10, RE20, RE30, RE40), and communicating, via the wireless digital communications means (12, 22, 32, 42, 52), identification tables (19, 29, 39, 49, 59) for each unit to the other subordinate units (10, 20, 30, 40); and
   • during an operative stage:

      • each unit (10, 20, 30, 40, 50) transmitting its UWB signature (SIG10, SIG20, SIG30, SIG40, SIG50), this transmission taking place after the transmission delay duration (RE10, RE20, RE30, RE40) has elapsed as measured from the beginning (T0) of the communications period (60);
      • each unit (10, 20, 30, 40, 50) analyzing the UWB signatures (SIG10, SIG20, SIG30, SIG40, SIG50) transmitted by the other units (10, 20, 30, 40, 50) and determining the distances (D10-20, D10-30, D10-40, D10-50, D20-10, D20-30, D20-40, D20-50, D30-10, D30-20, D30-40, D30-50, D40-10, D40-20, D40-30, D40-50, D50-10, D50-20, D50-30, D50-40) separating that unit (10, 20, 30, 40, 50) from each of the other units (10, 20, 30, 40, 50) ;
      • each subordinate unit (10, 20, 30, 40) transmitting to the coordinating unit (50) the distances (D10-20, D10-30, D10-40, D10-50, D20-10, D20-30, D20-40, D20-50, D30-10, D30-20, D30-40, D30-50, D40-10, D40-20, D40-30, D40-50) between that subordinate unit (10, 20, 30, 40) and each of the other units (10, 20, 30, 40, 50), this transmission taking place by using the wireless digital communications means (12, 22, 32, 42, 52); and
      • the coordinating unit (50) determining the relative positions of the subordinate units (10, 20, 30, 40) .

2. A method according to claim 1, wherein the coordinating unit has geolocation means for determining its position in a terrestrial reference frame, and the method includes an additional step (122) of determining the relative positions of the subordinate units (10, 20, 30, 40) relative to a terrestrial reference frame.

3. A method according to claim 1, including a prior step (101) of determining the relative position of a subordinate unit (10) relative to the coordinating unit (50), in which step the subordinate unit (10) is positioned at a reference point (82) of known position relative to the coordinating unit (50).

4. A positioning method according to claim 1, wherein the step of the coordinating unit (50) determining the relative positions of the subordinate units (10, 20, 30, 40) includes a step of optimizing a cost function ($C_1$, $C_2$) corresponding to one of the following expressions:

$$C_1(x_k, y_k, z_k) = \sum_{n \neq k} w_n \left( \sqrt{(x_k - x_n)^2 + (y_k - y_n)^2 + (z_k - z_n)^2} - d_n \right)^2$$

or

$$C_2(x_k, y_k, z_k) = \sum_{n \neq k} w_n ((x_k - x_n)^2 + (y_k - y_n)^2 + (z_k - z_n)^2 - d_n^2)^2$$

in which:

- $x_k$, $y_k$, and $z_k$ are the coordinates of the unit k of position that is to be determined in the coordinate system (O, X, Y, Z) associated with the unit 50;
- $d_n$ is the distance between the unit k and the unit n;
- $x_n$, $y_n$, and $z_n$ are the coordinates of the unit n at the distance $d_n$ from the unit k; and
- $w_n$ is a weighting coefficient associated with the measured reception power of the signal coming from the node of index n.

5. A method according to claim 1, including a prior step of determining the position of a subordinate unit (10) relative to the coordinating unit (50), during which the subordinate unit (10) remains stationary, the coordinating unit (50) moving in a zone containing the subordinate unit (10), and determining the position of the subordinate unit by triangulation on the basis of UWB transmissions.

6. A method according to claim 1, wherein the internal clocks (15, 25, 35, 45) of the subordinate units (10, 20, 30, 40) are synchronized using the periodic transmission of a synchronizing signal (61) by the coordinating unit (50) .

7. A method according to claim 6, wherein the synchronizing signal (61) is transmitted using the wireless communications means (51).

8. A method according to claim 6 or claim 7, wherein the coordinating unit (50) is provided with a GPS receiver (50), and the internal clock (56) of the main unit (50) corresponds to the clock of the GPS receiver (53).

9. A method according to claim 1, wherein the units (10, 20, 30, 40, 50) include means for evaluating altitude, and the method includes an additional step of determining the altitudes of the subordinate units (10, 20, 30, 40) relative to the coordinating unit (50).

10. A relative positioning system comprising a coordinating communications unit (50) that coordinates a group of subordinate communication units and at least a first (10), a second (20), a third (30) and a fourth (40) subordinate communication units , the coordinating communications unit and the subordinate communications units being movable relative to one another, the coordinating communications unit and the subordinate communications units having a UWB transceiver (11, 21, 31, 41, 51) and digital wireless communications means (12, 22, 32, 42, 52), each subordinate unit (10, 20, 30, 40) including an internal clock (15, 25, 35, 45) synchronized with the clock of the coordinating unit (56) in order to define a shared communications period (60), the systembeing **characterized in that** it is arranged to perform the method according to claim 1.

11. A positioning system according to claim 10, including a GPS receiver (13, 23, 33, 43, 53).

Fig. 1

Fig. 2

**100** Envoi des tables 19, 29, 39, 49 et 59 pour attribution et information

**101** Positionnement de l'unité 10 sur un point de référence

**102** Emission SIG10

**103** Réception de SIG10 par les unités 20, 30, 40 et 50

**104** Détermination de $D_{20-10}$, $D_{30-10}$, $D_{40-10}$ et $D_{50-10}$ et enregistrement de $RSSI_{20-10}$, $RSSI_{30-10}$, $RSSI_{40-10}$ et $RSSI_{50-10}$

**105** Emission SIG20

**106** Réception de SIG20 par les unités 10, 30, 40 et 50

**107** Détermination de $D_{10-20}$, $D_{30-20}$, $D_{40-20}$ et $D_{50-20}$ et enregistrement de $RSSI_{10-20}$, $RSSI_{30-20}$, $RSSI_{40-20}$ et $RSSI_{50-20}$

**108** Emission SIG30

**109** Réception de SIG30 par les unités 10, 20, 40 et 50

**110** Détermination de $D_{10-30}$, $D_{20-30}$, $D_{40-30}$ et $D_{50-30}$ et enregistrement de $RSSI_{10-30}$, $RSSI_{20-30}$, $RSSI_{40-30}$ et $RSSI_{50-30}$

**111** Emission SIG40

**112** Réception de SIG40 par les unités 10, 20, 30 et 50

**113** Détermination de $D_{10-40}$, $D_{20-40}$, $D_{30-40}$ et $D_{50-40}$ et enregistrement de $RSSI_{10-40}$, $RSSI_{20-40}$, $RSSI_{30-40}$ et $RSSI_{50-40}$

**114** Emission SIG50

**115** Réception de SIG50 par les unités 10, 20, 30 et 40

**116** Détermination de $D_{10-50}$, $D_{20-50}$, $D_{30-50}$ et $D_{40-50}$ et enregistrement de $RSSI_{10-50}$, $RSSI_{20-50}$, $RSSI_{30-50}$ et $RSSI_{40-50}$

**117** Transmission de $D_{10-20}$, $D_{10-30}$, $D_{10-40}$ et $D_{10-50}$ à l'unité 50 par DECT

**118** Transmission de $D_{20-10}$, $D_{20-30}$, $D_{20-40}$ et $D_{20-50}$ à l'unité 50 par DECT

**119** Transmission de $D_{30-10}$, $D_{30-20}$, $D_{30-40}$ et $D_{30-50}$ à l'unité 50 par DECT

**120** Transmission de $D_{40-10}$, $D_{40-20}$, $D_{40-30}$ et $D_{40-50}$ à l'unité 50 par DECT

**121** Détermination de la position relative des unités 10, 20, 30 et 40 par rapport à l'unité 50

**122** Détermination de la position des unités 10, 20, 30 et 40 dans un référentiel terrestre

**123** Diffusion par l'unité 50 des positions des unités 10, 20, 30 et 40 aux unités 10, 20, 30 et 40

Fig. 3

EP 3 207 400 B1

Fig. 4

EP 3 207 400 B1

| 19 | | 29 | | 39 | | 49 | | 59 |
|---|---|---|---|---|---|---|---|---|
| ID10<br>SIG10<br>RE10 | | ID20<br>SIG20<br>RE20 | | ID30<br>SIG30<br>RE30 | | ID40<br>SIG40<br>RE40 | | ID50<br>SIG50<br>RE50 |

Fig. 5

81      81      81   81       81

τ

SIG10

TS

Fig. 6

Fig. 7

100 ⌐ Envoi des tables 17, 27, 37, 47 et 57 pour attribution et information

200 ⌐ Envoi des coordonnées et vitesses initiales à l'unité 50

Transmission de $D_{40\text{-}10}$, $D_{40\text{-}20}$, $D_{40\text{-}30}$ et $D_{40\text{-}50}$ à l'unité 50 par DECT — 120

Détermination des coordonnées et vitesses initiales des unités 10, 20, 30 et 40 par l'unité 50 — 221

Traitement par filtre de Kalman et estimation des positions des unités 10, 20, 30, 40 — 222

Détermination de la position des unités 10, 20 et 30 dans un référentiel terrestre — 122

Fig. 8

**EP 3 207 400 B1**

## RÉFÉRENCES CITÉES DANS LA DESCRIPTION

**Documents brevets cités dans la description**

- US 20140152437 A